# FASCICULE DE BREVET EUROPEEN

(11) **EP 4 129 764 B1**
(45) Date de publication et mention de la délivrance du brevet: **23.10.2024**
(21) Numéro de dépôt: 22182484.0
(22) Date de dépôt: 01.07.2022
(51) Int. Cl.: B60R 9/045, B60R 9/058, F16B 2/18

(54) **VÉHICULE ÉQUIPÉ DE BARRES DE TOIT MODULABLES ET INVIOLABLES**
FAHRZEUG MIT MODULIERBAREN UND MANIPULATIONSSICHEREN DACHGEPÄCKTRÄGERN
VEHICLE EQUIPPED WITH MODULAR, TAMPER-PROOF ROOF BARS

(30) Priorité: 02.08.2021 FR 2108406
(43) Date de publication de la demande: 08.02.2023
(73) Titulaire: Renault s.a.s, 92100 Boulogne Billancourt (FR)
(72) Inventeur: DRAGOMIR, Mario-Vladut, 130010 Dambovita (RO)

(56) Documents cités:
- WO-A1-2006/036630
- DE-U1- 202017 102 513
- FR-A1- 3 081 138
- FR-A3- 3 050 966
- US-A1- 2006 163 297
- US-A1- 2008 257 924

## Description

La présente invention concerne un véhicule équipé de barres de toit modulables et inviolables.

Afin de bien comprendre le positionnement des différentes pièces impliquées dans un véhicule selon l'invention, la description est réalisée en faisant référence à un repère orthonormé direct XYZ dans lequel X est un axe longitudinal avantarrière du véhicule orienté vers l'arrière, Y est un axe transversal orienté vers la droite du véhicule et Z est un axe vertical dirigé vers le haut.

Actuellement, certains véhicules automobiles possèdent deux barres de toit parallèles, s'étendant de chaque côté du toit suivant un axe longitudinal X du véhicule. Pour une partie de ces véhicules, ces barres peuvent être démontées et/ou déplacées pour être ensuite fixées sur le toit de manière à s'étendre suivant un axe transversal Y du véhicule. Autrement dit, pour cette nouvelle configuration, les deux barres se retrouvent sur le toit en étant parallèles et placées l'une derrière l'autre en s'étendant chacune suivant un axe transversal Y du véhicule. Ce nouvel arrangement des barres permet l'arrimage d'objets sur le toit du véhicule, tels que par exemple des bagages, des vélos etc. Le document WO 2006/036630 A1 décrit un véhicule automobile comprenant un agencement de barres de toit selon le préambule de la revendication 1.

Or, le passage des barres d'une configuration à l'autre est souvent malaisé, car il nécessite la mise en oeuvre d'opérations compliquées et lourdes, nécessitant le plus souvent un outillage adapté et des manipulations contraignantes. De plus, ces barres qui sont accessibles par n'importe qui depuis l'extérieur du véhicule, peuvent être facilement volées sans avoir à fracturer le véhicule.

Un véhicule selon l'invention possède des barres de toit conçues pour occuper, soit une position longitudinale pour laquelle elles s'étendent suivant un axe longitudinal X du véhicule, soit une position transversale pour laquelle elles s'étendent suivant un axe transversal Y de celui-ci, en étant inviolables et grâce à des manipulations simples ne nécessitant aucune opération compliquée.

Pour clarifier la situation, un véhicule selon l'invention comprend une première barre et une deuxième barre. L'expression « les barres » utilisée dans la suite de la description est donc équivalente à « la première barre et la deuxième barre ». De même, l'expression « chaque barre » désigne indifféremment la première barre ou la deuxième barre.

L'invention a pour objet un véhicule, tel que défini dans la revendication 1, comprenant un toit, une première barre et une deuxième barre, fixées chacune sur ledit toit par l'intermédiaire d'au moins une pièce support, lesdites deux barres étant déplaçables entre une position longitudinale pour laquelle elles s'étendent chacune suivant un axe longitudinal X du véhicule et une position transversale pour laquelle elles s'étendent chacune suivant un axe transversal Y du véhicule.

Selon l'invention, chacune des barres est fixée à ladite au moins une pièce support par l'intermédiaire d'au moins un élément de fixation rapide comprenant un levier d'actionnement, un excentrique et une tige se terminant par un embout élargi, l'élément de fixation rapide étant apte à passer d'une position de verrouillage de la barre sur la pièce support pour laquelle l'embout est en butée contre une paroi de ladite pièce support et maintient la barre contre celle-ci, à une position de déverrouillage suite à une mise en rotation du levier d'actionnement et pour laquelle la tige s'est déplacée grâce à la présence de l'excentrique de sorte que l'embout élargie s'est écarté de sa position et libère la barre en mouvement pour lui permettre d'être déplacée.

Le principe d'un véhicule selon l'invention est de comprendre des éléments de fixation rapides des barres de toit pouvant être manipulés simplement avec la main, sans avoir à se servir d'un outillage particulier et sans avoir recours à des manipulations compliquées réclamant de la force et de la précision. Ces éléments de fixation rapides, non seulement permettent aisément et rapidement de faire passer les barres de toit d'une position longitudinale à une position transversale ou vice versa, mais servent également d'organes d'inviolabilité en empêchant de séparer simplement lesdites barres de toit, dudit véhicule. Cette inviolabilité est réalisée par l'embout élargi qui est enfoui dans la pièce support et qui est donc inaccessible, cet embout élargi étant configuré pour retenir la barre contre le toit. Pour voler ces barres de toit il faudrait procéder à l'arrachement des pièces support qui sont solidement arrimées au toit, ou bien détruire ces pièces support, qui sont deux opérations compliquées et donc risquées. Ces éléments de fixation rapides sont autonomes et ne dépendent directement, ni des pièces support ni des barres de toit. Ce sont des éléments à part, qui viennent s'insérer à des endroits particuliers desdites pièces support, sans faire partie de ces pièces. Le levier d'actionnement est assimilable à une poignée qui est actionnable manuellement par rotation. La position de verrouillage correspond à une configuration de l'élément de fixation qui fixe étroitement la barre de toit contre ledit toit, et la position de déverrouillage correspond à une configuration de l'élément de fixation qui libère en mouvement la barre de toit afin qu'elle puisse être déplacée sans contrainte.

Les pièces support sont préférentiellement des pièces rapportées allongées, qui s'étendent suivant un axe longitudinal X du véhicule, et de chaque côté de celui-ci. Chaque barre en étant fixée à au moins une pièce support, est légèrement surélevée par rapport au toit du véhicule sur lequel sont placées lesdites pièces support. Lors de leur passage de la configuration longitudinale à la configuration transversale, les barres demeurent continuellement dans une position sensiblement horizontale. Les deux barres peuvent se manipuler indépendamment l'une de l'autre, et avantageusement, elles peuvent être déplacées le long d'un axe transversal Y du véhicule grâce à la présence d'un trou oblong, de manière à réajuster leur position en vue de ne pas gêner le mouvement de l'autre barre

Selon une caractéristique possible de l'invention, l'excentrique fait partie intégrante du levier d'actionnement et se présente sous la forme de deux pattes ajourées assimilables chacune à un anneau de largeur variable, la tige possédant un axe de rotation passant par lesdites deux pattes et une mise en rotation du levier entrainant une mise en rotation desdites pattes provoquant une translation de la tige en raison de la largeur variable desdites pattes.

Selon l'invention, chaque pièce support comporte un canal et chaque élément de fixation rapide traverse la barre et la pièce support de manière à ce que la tige soit placée dans ledit canal, la position verrouillée correspondant à une mise en butée de l'embout élargie contre une paroi externe de la pièce support délimitant une première extrémité dudit canal et la position déverrouillée correspond à un éloignement dudit embout élargi de ladite paroi. Dans un premier temps, l'embout élargi qui est appuyé contre une paroi de la pièce support délimitant la première extrémité du canal et empêche tout mouvement de l'élément de fixation rapide, est repoussé de ladite paroi pour se retrouver à l'extérieur du canal et permettre audit élément de fixation rapide d'être déplacé. Au fur et à mesure que le levier d'actionnement pivote la tige se translate en entrainant la sortie de l'embout élargi du canal interne de la pièce support.

Selon l'invention, l'embout possède au moins deux protubérances externes et le canal interne possède au moins deux canaux satellites, et une fois que l'embout a été sorti du canal correspondant à la position déverrouillée de l'élément de fixation rapide, ledit élément de fixation subit d'abord un mouvement de rotation de manière à placer les protubérances en face des canaux satellites, puis un mouvement de translation de façon à faire coulisser l'embout dans le canal sans possibilité de rotation jusqu'à venir en butée contre la deuxième extrémité du canal interne. Une fois que l'embout élargi a été sorti du canal sous l'action du levier d'actionnement, les protubérances sont décalées par rapport aux canaux satellites. L'élément de fixation rapide va alors subir une rotation manuelle autour d'un axe longitudinal de celui-ci, de manière à faire pivoter l'embout relativement au canal interne dans le but de placer les protubérances de l'embout en face des canaux satellites. Dans cette nouvelle position, l'embout élargi va pouvoir coulisser dans le canal jusqu'à atteindre la deuxième extrémité. Autrement dit, le canal comprend une première extrémité et une deuxième extrémité, considérées suivant un axe longitudinal dudit canal, et l'embout élargi va coulisser dans le canal entre la première extrémité du canal et la deuxième extrémité de celui-ci.

Selon une caractéristique possible de l'invention, chaque barre présente une paroi inférieure plane et de faible épaisseur, l'élément de fixation étant placé dans une ouverture de ladite paroi inférieure de sorte que le levier d'actionnement saille d'un côté de la paroi à l'intérieur de la barre et la tige d'actionnement saille de l'autre côté de ladite paroi en étant insérée dans le canal interne de la pièce support. De cette manière, la tige dotée de son embout est placée du côté de la paroi inférieure de la barre faisant face à la pièce support, et le levier d'actionnement saille de l'autre côté de la paroi pour être accessible par un utilisateur. De cette manière, l'embout élargi placé dans le canal interne de la pièce support est enfoui dans ladite pièce support, et va retenir la barre de toit contre ladite pièce support sans possibilité d'être retirée.

Selon une caractéristique possible de l'invention, dans la position de verrouillage le levier d'actionnement s'étend le long de la paroi inférieure de la barre en venant au contact de ladite paroi, et dans la position de déverrouillage le levier d'actionnement saille perpendiculairement de la paroi inférieure de ladite barre.

Selon une caractéristique possible de l'invention :
- le toit possède quatre pièces support, dont deux pièces support arrière alignées suivant un axe transversal Y du véhicule et deux pièces support avant alignés suivant un axe transversal Y du véhicule, de sorte que chaque barre est fixée à une pièce support avant et à une pièce support arrière lorsqu'elle occupe la position longitudinale, lesdites deux fixations étant réalisées chacune avec un élément de fixation rapide,
- une fois que l'élément de fixation rapide permettant de fixer la première barre à une pièce support arrière a été déverrouillé, ladite première barre est apte à pivoter autour d'un axe de rotation vertical Z de la pièce support avant sur laquelle elle était montée, pour pouvoir joindre l'autre pièce support avant et s'étendre suivant un axe transversal Y du véhicule et,
- une fois que l'élément de fixation rapide permettant de fixer la deuxième barre à une pièce support arrière et que l'élément de fixation rapide permettant de fixer ladite deuxième barre à une pièce support avant ont été déverrouillés, la dite deuxième barre est apte à pivoter autour d'un axe de rotation vertical Z de ladite pièce support arrière après avoir subi un mouvement de translation vers l'avant le long de ladite pièce support arrière, de manière à venir placer une extrémité de ladite deuxième barre en correspondance avec ledit axe de rotation vertical Z, et pouvoir joindre l'autre pièce support arrière de manière à s'étendre suivant un axe transversal Y du véhicule.

Lors de leur transformation entre la position longitudinale et la position transversale, les barres demeurent continuellement dans une position sensiblement horizontale au-dessus du toit du véhicule. Les deux barres peuvent se manipuler indépendamment l'une de l'autre, et avantageusement, elles peuvent être déplacées le long d'un axe transversal Y du véhicule grâce à la présence d'un trou oblong, de manière à réajuster leur position le long dudit axe transversal Y de manière à ne pas gêner le mouvement de l'autre barre.

Selon une caractéristique possible de l'invention, chaque barre subit un mouvement de translation préalable vers le haut de manière à empêcher ladite barre de venir en butée contre un indexeur de la pièce support dans laquelle l'axe de rotation vertical Z est fixé, et ainsi empêcher le mouvement de rotation lui permettant de s'étendre suivant un axe transversal Y du véhicule.

Selon une caractéristique possible de l'invention, la deuxième barre possède une fente s'étendant le long d'un axe longitudinal de ladite deuxième barre, l'axe de rotation vertical Z de la pièce support arrière passant dans ladite fente de sorte que ladite fente se déplace relativement audit axe de rotation vertical lorsque la deuxième barre subit le mouvement de translation.

Selon une caractéristique possible de l'invention, la première barre et la deuxième barre pivotent sur la totalité de leur longueur pour passer de la position longitudinale à la position transversale du véhicule. De cette manière, l'opération consistant à faire passer les barres de toit de la position longitudinale à la position transversale ou vice versa est grandement simplifiée car elle est réalisée en une seule fois.

L'invention a pour autre objet un procédé de déplacement de la première barre et de la deuxième barre entre la position longitudinale et la position transversale, tel que définit dans la revendication 9, pour un véhicule conforme à l'invention.

Selon l'invention, le procédé comporte les étapes suivantes :
- une étape de déverrouillage des deux éléments de fixation rapides de la première barre placés aux deux extrémités de ladite première barre, au moyen d'un relèvement par rotation des leviers d'actionnement puis d'une mise en rotation manuelle desdits éléments de fixation,
- une étape de surélévation de la première barre,
- une étape de mise en rotation de la première barre autour d'un axe de rotation vertical de la pièce support avant sur laquelle elle est montée pour atteindre l'autre pièce support avant et s'étendre ainsi le long d'un axe transversal Y du véhicule,
- une étape de verrouillage des deux éléments de fixation rapides de la première barre au moyen d'un rabattement par rotation des leviers d'actionnement,
- une étape de déverrouillage des deux éléments de fixation rapides de la deuxième barre placés aux deux extrémités de ladite deuxième barre, au moyen d'un relèvement par rotation des leviers d'actionnement puis d'une mise en rotation manuelle desdits éléments de fixation,
- une étape de translation vers l'avant de la deuxième barre 3, le long de la pièce support arrière sur laquelle elle est montée de manière à venir placer une extrémité de ladite deuxième barre en correspondance avec un axe de rotation vertical Z de ladite pièce arrière,
- une étape de surélévation de la deuxième barre,
- une étape de mise en rotation de la deuxième barre autour dudit axe de rotation vertical pour atteindre l'autre pièce support arrière et s'étendre ainsi le long d'un axe transversal Y du véhicule,
- une étape de verrouillage des deux éléments de fixation rapides de la deuxième barre au moyen d'un rabattement par rotation des leviers d'actionnement.

Un véhicule selon l'invention présente l'avantage de posséder des barres de toit aptes à passer d'une position longitudinale à une position transversale, sans nécessiter un quelconque outil et sans avoir à procéder à des manipulations compliquées nécessitant de la force et/ou de la précision. De plus, grâce à la présence des éléments de fixation rapides, un véhicule selon l'invention a l'avantage de posséder des barres de toit inviolables, car quelles que soient leur position, elles demeurent en permanence accrochées au toit sans possibilité d'être retirées simplement de celui-ci.

On donne ci-après une description détaillée d'un mode de réalisation préféré d'un véhicule selon l'invention en se référant aux figures suivantes :
[Fig. 1] représente une vue en perspective d'un véhicule selon l'invention pour lequel les barres de toit s'étendent selon un axe longitudinal X du véhicule,
[Fig. 2] représente une vue en perspective d'un véhicule selon l'invention pour lequel les barres de toit s'étendent selon un axe transversal Y du véhicule,
[Fig. 3] représente une vue en perspective partielle d'un toit de véhicule selon l'invention montrant les deux barres en cours de changement de position et quatre pièces support,
[Fig. 4] représente une vue en perspective partielle d'un toit de véhicule selon l'invention montrant les quatre pièces support de la figure 3,
[Fig. 5] représente une vue en perspective d'une extrémité d'une barre de toit d'un véhicule selon l'invention, montrant partiellement un élément de fixation rapide,
[Fig. 6] représente une vue de côté de l'élément de fixation rapide de la figure 5, dans une position verrouillée,
[Fig. 7] représente une vue de face de l'embout de l'élément de fixation rapide de la figure 6 en butée contre une extrémité d'un canal d'une pièce support, dans une position verrouillée,
[Fig. 8] représente une vue de côté de l'élément de fixation rapide de la figure 5, dans une position déverrouillée,
[Fig. 9] représente une vue en perspective de l'élément de fixation rapide de la figure 8, après avoir été mis en rotation,
[Fig. 10] représente une vue en perspective de l'élément de fixation rapide de la figure 9, après un mouvement de translation vers le haut correspondant à un coulissement vers le haut de l'embout dans le canal interne de la pièce support,
[Fig. 11] représente une vue de face de l'embout de l'élément de fixation rapide de la figure 10 inséré dans le canal et apte à coulisser dans celui-ci.

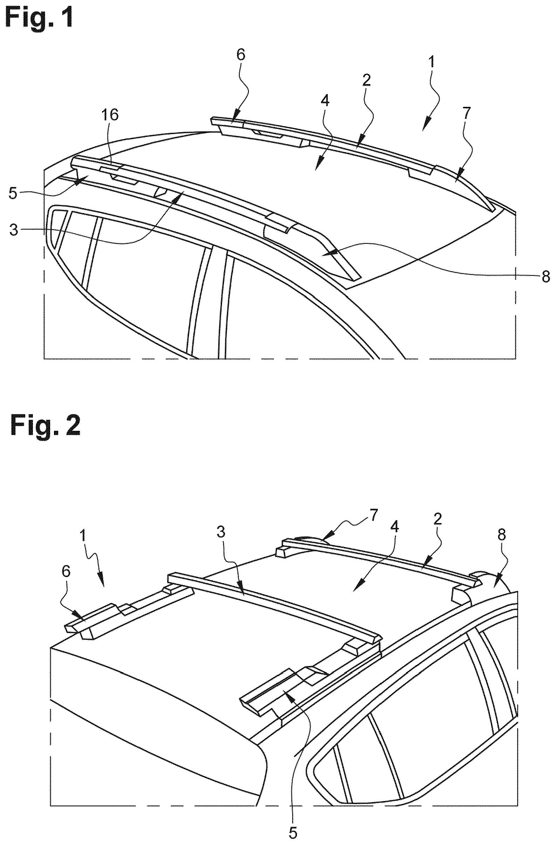

En se référant aux figures 1 et 2, un véhicule 1 selon l'invention possède une première barre 2 de toit et une deuxième barre 3 de toit, aptes à passer :
- d'une position longitudinale comme illustré à la figure 1 et pour laquelle les deux barres 2, 3 sont parallèles et s'étendent de chaque côté du véhicule selon un axe longitudinal X de celui-ci,
- à une position transversale comme illustré à la figure 2 et pour laquelle les deux barres 2, 3 sont parallèles et s'étendent selon un axe transversal Y du véhicule.

Dans le cadre d'un véhicule selon l'invention, le passage de la position longitudinale à la position transversale est simple et rapide à réaliser, sans un outillage particulier et sans avoir recours à des manipulations compliquées, nécessitant de la force et /ou de la précision. Il est à noter que le passage de la position longitudinale à la position transversale est réversible avec la même rapidité et la même simplicité. De cette manière, les barres 2, 3 sont disposées sur le toit 4 du véhicule 1 à la convenance d'un utilisateur, en fonction de ses besoins spécifiques.

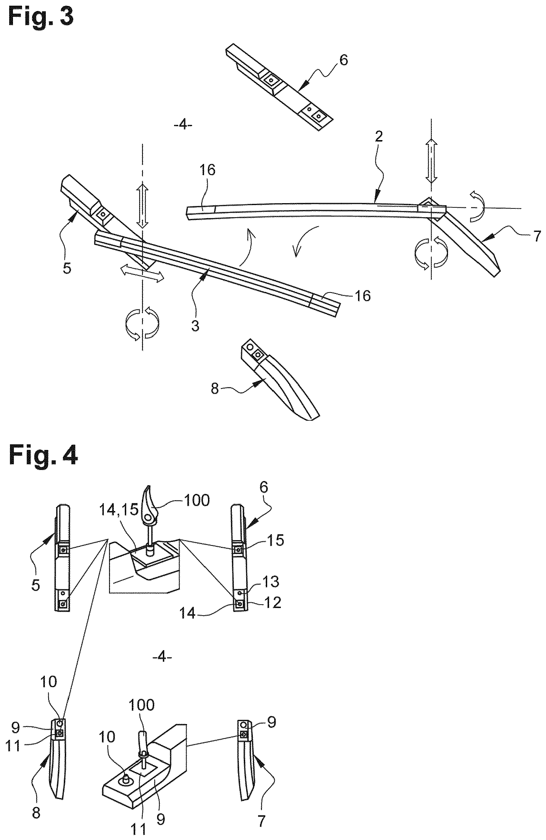

En se référant aux figures 3 et 4, pour fixer les deux barres 2, 3 sur le toit 4, le véhicule dispose de quatre pièces support 5, 6, 7, 8 dont deux 5, 6 sont disposées à l'arrière du toit 4 et sont alignées suivant un axe transversal Y du véhicule 1, et dont deux 7, 8 sont disposées à l'avant dudit toit 4 et sont alignées suivant un axe transversal Y dudit véhicule 1. Chacune des quatre pièces support 5, 6, 7, 8 est allongée et est placée sur le toit 4 du véhicule 1 de sorte que son axe longitudinal s'étende suivant un axe longitudinal X du véhicule. Ces quatre pièces support 5, 6, 7, 8 sont fixées sur le toit 4 de façon inamovible, et constituent des protubérances saillant au-dessus dudit toit.

Chaque pièce support 7, 8 avant comporte une zone arrière 9 considérée le long d'un axe longitudinal de ladite pièce 7,8 support avant, comportant un pion d'indexage 10 et un point de fixation 11 destiné à recevoir un élément de fixation 100 rapide pour l'arrimage d'une barre 2, 3 de toit à ladite pièce support 7, 8. Le pion d'indexage 10 est situé derrière le point de fixation 11, et constitue l'élément le plus proche de l'extrémité arrière de ladite pièce support avant 7, 8. Ce pion d'indexage 10 est allongé et saille verticalement vers le haut de la pièce support 7, 8 avant et est amené à coopérer avec un élément structurelle de la barre 2,3, pour prépositionner correctement ladite barre 2, 3 sur ladite pièce support avant 7, 8. Puisque ces deux pièces support avant 7, 8 sont placées sur le toit 4 à l'avant du véhicule 1, elles sont profilées de manière à améliorer la pénétration du véhicule dans l'air et ainsi améliorer son aérodynamique.

Chaque pièce support 5, 6 arrière comporte une zone avant 12 considérée le long d'un axe longitudinal de ladite pièce 5, 6 support arrière, ladite zone avant 12 comportant un pion d'indexage 13 et un premier point de fixation 14 destiné à recevoir un élément de fixation 100 rapide pour l'arrimage d'une barre 2, 3 de toit sur ladite pièce support arrière 5, 6. Le pion d'indexage 13 est situé derrière le premier point de fixation 14, ledit premier point de fixation 14 constituant l'élément le plus proche de l'extrémité avant de ladite pièce support arrière 5, 6. Ce pion d'indexage 13 est allongé et saille verticalement vers le haut de la pièce support 5, 6 arrière, et est amené à coopérer avec un élément structurelle de la barre 2,3, pour prépositionner correctement ladite barre 2, 3 sur ladite pièce support arrière 5, 6. Chaque pièce support 5, 6 arrière comporte un deuxième point de fixation 15 situé dans une zone légèrement excentrée vers l'arrière d'une zone centrale 16 de ladite pièce support 5, 6. Ce deuxième point de fixation 15 est destiné à recevoir un élément de fixation 100 rapide pour l'arrimage d'une barre 2, 3 de toit sur ladite pièce support arrière 5, 6.

Concernant chaque pièce support arrière 5, 6 le premier point de fixation 14 et le deuxième point de fixation 15 sont utilisés en alternance, le deuxième point de fixation 15 étant requis pour placer les barres 2, 3 de toit dans la position longitudinale et le premier point de fixation 14 étant requis pour placer lesdites deux barres 2, 3 dans la position transversale.

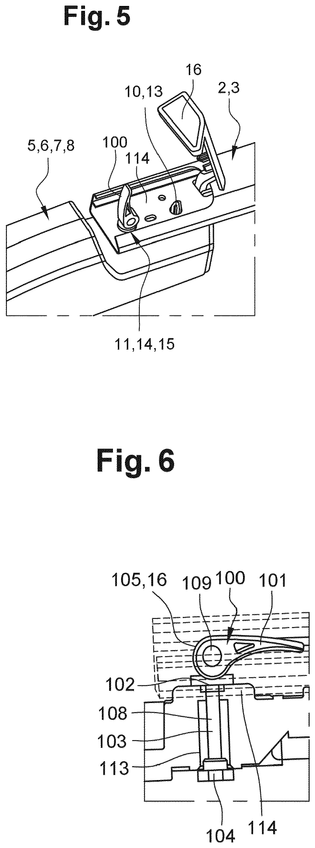

En se référant à la figure 5, les différents points de fixation 11, 14, 15 sont destinés à recevoir chacun un élément de fixation 100 rapide, destiné à fixer les barres 2, 3 sur le toit 4, sans avoir recours à des outils spécifiques et/ou à des manipulations compliquées, nécessitant de la force et/ou de la précision. Chacune des deux barres 2, 3, que ce soit dans la position longitudinale ou dans la position transversale, est fixée aux pièces support 5, 6, 7, 8 du toit 4 au moyen de deux éléments de fixation rapides 100, placés aux deux extrémités de la barre 2, 3 considérées suivant un axe longitudinal de ladite barre 2, 3. Comme cela sera décrit plus en détail ci-après, chacune des deux barres 2, 3 possède à chacune de ses extrémité considérées suivant un axe longitudinal de ladite barre 2, 3, deux caches 16 montés pivotant, et destinés à masquer les deux élément de fixation rapide 100. En effet, lorsque chaque barre 5, 6 est montée dans la position longitudinale ou la position transversale sur le toit 4, chaque cache 16 recouvre l'élément de fixation rapide 100, et lorsqu'un utilisateur souhaite changer la position de ces barres 2, 3 sur le toit 4, il ouvre ces caches 16 au moyen d'un pivotement vers le haut comme cela est illustré à la figure 5 pour pouvoir accéder aux éléments de fixation rapide 100.

Chaque élément de fixation 100 rapide est apte à passer par une simple manipulation avec la main, d'une position verrouillée pour laquelle il fixe la barre 2, 3 à une pièce support 5, 6, 7, 8 du toit 4, à une position déverrouillée pour laquelle il libère en mouvement ladite barre 5 pour la placer dans la position souhaitée, soit longitudinale, soit transversale.

En se référant aux figures 6, 8, 9 et 10, chaque élément de fixation rapide 100 comprend un levier d'actionnement 101, une rondelle support 102, une tige 103 et un embout 104, ledit levier d'actionnement 101 et ladite tige 103 étant placés de chaque côté de la rondelle support 102. Le levier d'actionnement 102 comprend deux pattes 105, 106 planes et de faible épaisseur dotée chacune d'une ouverture traversante, et la tige 103 comprend un corps 108 rectiligne et allongé, et un axe de rotation 109 qui est perpendiculaire audit corps rectiligne 108. Chacune des deux pattes 105, 106 est arrondie et définit un anneau dont la largeur est variable, lesdites deux pattes 105, 106 jouant le rôle d'un excentrique au sein de l'élément de fixation rapide 100. L'axe de rotation 109 est placé à une première extrémité du corps rectiligne 108 considérée suivant un axe longitudinal de ce corps 108, et une deuxième extrémité dudit corps 108 considérée suivant un axe longitudinal de celui-ci porte l'embout 104. L'axe de rotation 109 passe dans les ouvertures 107 des deux pattes 105, 106 du levier d'actionnement 101, si bien que la tige 103 est suspendue audit levier 101. De cette manière, le levier d'actionnement 101 se retrouve d'un côté de la rondelle support 102, et la tige traverse ladite rondelle 102 de sorte que l'axe de rotation 109 de celle-ci 103 se retrouve du même côté de la rondelle 102 que ledit levier d'actionnement 101, le corps 108 de ladite tige 103 dotée de l'embout 104 s'étendant de l'autre côté de la rondelle 102.

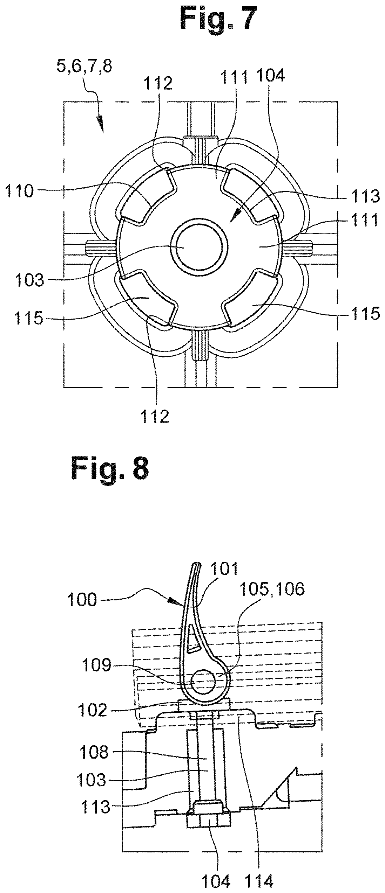

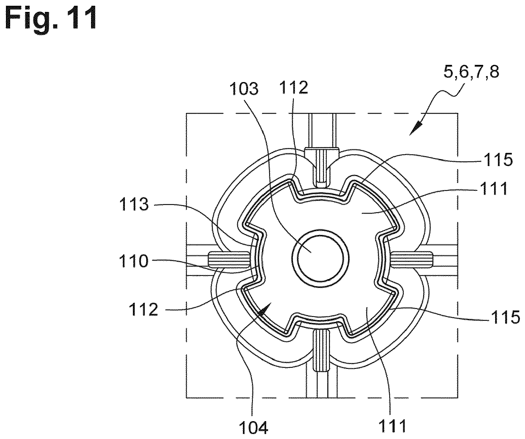

En se référant aux figures 7 et 11, l'embout 104 est assimilable à un capuchon venant s'enfiler autour de la deuxième extrémité de la tige 103. Schématiquement, l'embout 104 présente un corps 110 et quatre protubérances 111 s'étendant radialement sur ledit corps 110 vers l'extérieur de celui-ci. Selon une coupe transversale de l'embout 104, ces protubérances 111 sont taillées en angle et présentent donc des arêtes 112. L'embout 104 est solidement fixé à la deuxième extrémité de la tige 103 sans possibilité de mouvement par rapport à celle-ci.

Pour chaque point de fixation 11, 14, 15, chacune des pièces support 5, 6, 7, 8 comprend un canal 113 et chaque barre 2, 3 comporte une paroi inférieure 114 plane et de faible épaisseur. Lorsque les barres 2, 3 sont placées sur les pièces support 5, 6, 7, 8 du toit 4, cette paroi inférieure 114 s'étend dans un plan sensiblement horizontal XY et matérialise la partie la plus basse de chaque barre 2, 3.

En se référant aux figures 7 et 11, le canal 113 de chaque pièce support 5, 6, 7 et 8 présente quatre canaux satellites 115. Selon une coupe transversale de du canal 113, ces canaux stellites 115 forment des protubérances taillées en angle et présentant donc des arêtes 112. Le canal 113 et chaque canal satellite 115 ont des dimensions supérieures respectivement à celles du corps 110 de l'embout 104 et des protubérances 111 dudit embout 104. De cette manière, le corps 110 de l'embout 104 peut être placé dans le canal 113 et les protubérances 111dudit embout 104 peuvent placées dans les canaux satellites 115 dudit canal 113, de manière à ce que l'embout 104 puisse coulisser dans ledit canal 113.

En se référant aux figures 6, 8 et 9, chaque élément de fixation rapide 100 est agencé sur le toit 4 du véhicule 1 de sorte que :
- la rondelle support 102 soit placé contre la paroi inférieure 114 de la barre 2, 3,
- le levier d'actionnement 101 se retrouve dans la barre 2, 3, et,
- la tige 103 s'étend dans le canal 110 de la pièce support 5, 6, 7, 8 et se retrouve à l'extérieur de la barre 2, 3.

En se référant aux figures 6 et 7, lorsque les barres de toit 2, 3 sont fixées sur le toit 4, chaque élément de fixation 100 rapide se retrouve dans une position verrouillée pour laquelle l'embout 104 est bloquée contre une paroi de la pèce support 5, 6, 7, 8 délimitant une première extrémité du canal 110. Comme le montre la figure 7, dans cette position de verrouillage les protubérances 111 de l'embout 104 sont décalées par rapport aux canaux satellites 115, si bien que ledit embout 104 ne peut pas pénétrer dans le canal 110. Pour cette position verrouillée, le levier d'actionnement 101 est replié contre la paroi inférieure 114 de la barre 2, 3 de toit.

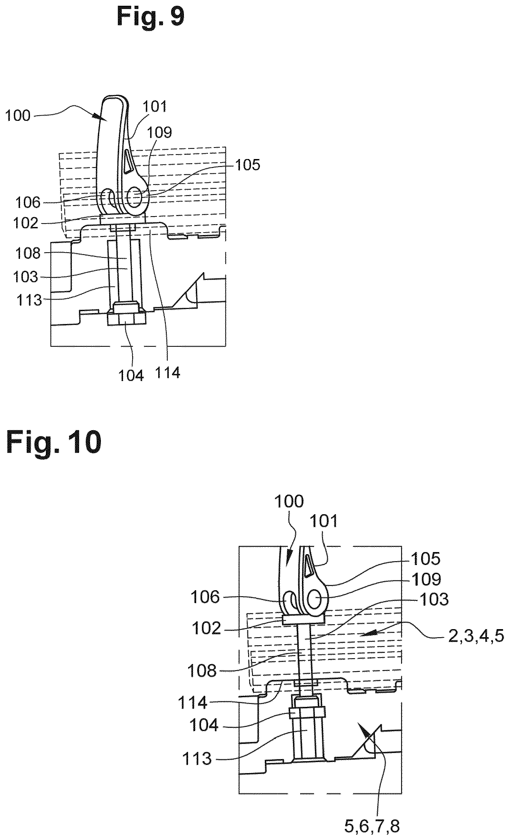

Lorsqu'un utilisateur souhaite modifier la position de ces barres de toit 2, 3 à partir de la position verrouillée de l'élément de fixation rapide 100 décrite ciavant, il procède aux opérations suivantes :
- il fait pivoter vers le haut le levier d'actionnement 101, comme cela est illustré à la figure 8, entrainant une rotation des pattes de fixation 105, 106 sur la rondelle support 102. Comme la largeur de ces pattes de fixation 105, 106 est variable, le pivotement de ce levier d'actionnement 101 entraine un éloignement de l'embout 104 qui n'est plus bloqué contre la paroi délimitant la première extrémité du canal 113. Dans cette configuration, le levier d'actionnement 101 et la tige 103 sont alignés,
- Il procède ensuite à une rotation manuelle de l'élément de fixation rapide 100, autour d'un axe longitudinal de celui-ci comme illustré à la figure 9. En effectuant cette rotation, préférentiellement d'une amplitude angulaire comprise entre 20° et 40°il aligne les protubérances 111 de l'embout 104 avec les canaux satellites 115 du canal 113 de la pièce support 5, 6, 7, 8, comme cela est illustré à la figure 11,
- il effectue une translation vers le haut de l'élément de fixation 100 rapide comme cela est illustré à la figure 10, s'accompagnant d'un coulissement vers le haut de l'embout 104 dans le canal 113 de la pièce support 5, 6, 7, 8 correspondante. Cette translation vers le haut de l'élément de fixation 100 rapide s'accompagne d'une translation vers le haut de la barre 2, 3 de toit comme cela est illustré à la figure 10. Il est à noter que cette translation vers le haut de la barre 2, 3 de toit est provoquée volontairement par l'utilisateur et n'est pas occasionnée automatiquement par la translation vers le haut de l'élément de fixation rapide 100. Cette surélévation de la barre 2, 3 va permettre à celle-ci de pivoter autour d'un axe vertical, en empêchant ladite barre 2, 3 d'être bloquée par un pion d'indexage 10, 13.

Un procédé de déplacement de la première barre 2 et de la deuxième barre 3 entre la position longitudinale et la position transversale comporte les étapes suivantes :
- une étape d'ouverture des deux caches 16 pour accéder aux éléments de fixation rapides 100 de la première barre 2,
- une étape de déverrouillage des deux éléments de fixation 100 rapides de la première barre 2 placés aux deux extrémités de ladite première barre 2, au moyen d'un relèvement par rotation des leviers d'actionnement 101 puis d'une mise en rotation manuelle desdits éléments de fixation 100 avec une amplitude angulaire comprise entre 20° et 40°,
- une étape de surélévation de la première barre 2 s'accompagnant d'une surélévation de l'élément de fixation rapide 100 ,
- une étape de mise en rotation de la première barre 2 autour d'un axe de rotation vertical de la pièce support avant 7 sur laquelle elle est montée, pour atteindre l'autre pièce support avant 8 et s'étendre ainsi le long d'un axe transversal Y du véhicule 1. Cette étape de mise en rotation est possible grâce à l'étape de surélévation précédente empêchant la première barre 2 de venir en butée contre le pion d'indexage 10 de la pièce support avant 7 sur laquelle elle est montée
- une fois que la première barre 2 relie les deux pièces support avant 7, 8 et s'étend suivant un axe transversal Y du véhicule 1, le procédé comprend une étape de verrouillage des deux éléments de fixation 100 rapides de la première barre 2 au moyen d'un rabattement par rotation des leviers d'actionnement 101 contre la paroi inférieure 114 de la première barre 2,
- une étape de fermeture des deux caches 16,
- une étape d'ouverture des deux caches 16 pour accéder aux éléments de fixation rapides 100 de la deuxième barre 3,
- une étape de déverrouillage des deux éléments de fixation 100 rapides de la deuxième barre 3 placés aux deux extrémités de ladite deuxième barre 3, au moyen d'un relèvement par rotation des leviers d'actionnement 101 puis d'une mise en rotation manuelle desdits éléments de fixation 100 avec une amplitude angulaire comprise entre 20° et 40°,
- une étape de translation vers l'avant de la deuxième barre 3 le long de la pièce support arrière 5 sur laquelle elle est montée, de manière à venir placer l'élément de fixation rapide 100 situé dans une extrémité de ladite deuxième barre 3 et qui était initialement placé au deuxième point de fixation 15 de la pièce support arrière 5, au premier point de fixation 14. Cette translation vers l'avant de la deuxième barre 3 est rendue possible grâce à la présence d'une fente pratiquée dans la paroi inférieure 114 de cette barre 3 et s'étendant suivant un axe longitudinal de ladite deuxième barre 3. Ce coulissement vers l'avant de la deuxième barre 3 est également rendu possible car l'élément de fixation 100 qui solidarisait ladite deuxième barre 3 à la pièce support avant 7 a été préalablement déverrouillé,
- une étape de surélévation de la deuxième barre 3,
- une étape de mise en rotation de la deuxième barre 3 autour d'un axe de rotation vertical de la pièce support arrière 5 sur laquelle elle est montée, pour atteindre l'autre pièce support arrière 6 et s'étendre ainsi le long d'un axe transversal Y du véhicule 1. Cette étape de mise en rotation est possible grâce à l'étape de surélévation précédente empêchant la deuxième barre 3 de venir en butée contre le pion d'indexage 13 de la pièce support arrière 5 sur laquelle elle est montée,
- une étape de verrouillage des deux éléments de fixation 100 rapides de la deuxième barre 3 au moyen d'un rabattement par rotation des leviers d'actionnement 101.

La position de chaque barre 2, 3 de toit peut être réajustée suivant un axe transversal Y du véhicule, grâce à la présence d'au moins un trou oblong dans ladite barre 2, 3. Ce degré de liberté supplémentaire permet de positionner les barres de toit 2, 3 sur le toit 4 avec une grande souplesse, pour notamment empêcher que l'une des deux barres 2, 3 ne gêne l'autre barre 2, 3 durant leur changement de position.

Chaque barre 2, 3 dispose de premiers éléments d'inviolabilité grâce à la présence des éléments de fixation 100 rapides dont l'embout 104 reste bloqué dans la pièce support 5, 6, 7, 8 en étant enfoui dans cette pièce support 5, 6, 7, 8. Voler les barres 2, 3 de toit reviendrait à arracher les pièces support 5, 6, 7 et 8 qui ne constitue pas une opération simple.

Chaque barre 2, 3 peut également disposer de deuxièmes éléments d'inviolabilité sous la forme de pions possédant des têtes élargies, lesdits pions étant fixés aux pièces support 5, 6, 7, 8 et les têtes élargies émergeraient dans les barres 2, 3 de toit, pour empêcher tout retrait simple desdites barres 2, 3. Les pions sont également enfouis dans les pièces supports 5, 6, 7, 8 et sont difficilement accessibles voire inaccessibles, pour toute personne mal intentionnée désirant voler les barres 2, 3 de toit.

## Revendications

1. Véhicule (1) comprenant un toit (4), une première barre (2) et une deuxième barre (3) fixées chacune sur ledit toit (4) par l'intermédiaire d'au moins une pièce support (5, 6, 7, 8), lesdites deux barres (2, 3) étant déplaçables entre une position longitudinale pour laquelle elles s'étendent chacune suivant un axe longitudinal X du véhicule et une position transversale pour laquelle elles s'étendent chacune suivant un axe transversal Y du véhicule, chacune des barres (2, 3) étant fixée à ladite au moins une pièce support (5, 6, 7, 8) par l'intermédiaire d'au moins un élément de fixation (100) rapide comprenant un levier d'actionnement (101), un excentrique (105, 106) et une tige (103) se terminant par un embout élargi (104), et l'élément de fixation (100) rapide étant est apte à passer d'une position de verrouillage de la barre (2, 3) sur la pièce support (5, 6, 7, 8) pour laquelle l'embout (104) est en butée contre une paroi de ladite pièce support (5, 6, 7, 8) et maintient la barre (2, 3) contre celle-ci (5, 6, 7, 8), à une position de déverrouillage suite à une mise en rotation du levier d'actionnement (101) et pour laquelle la tige (103) s'est déplacée grâce à la présence de l'excentrique (105, 106), de sorte que l'embout élargie (104) s'est écarté de sa position et libère la barre (2, 3) en mouvement pour lui permettre d'être déplacée, chaque pièce support (5, 6, 7, 8) comportant un canal (113) et chaque élément de fixation rapide (100) traversant la barre (2, 3) et la pièce support (5, 6, 7, 8) de manière à ce que la tige (103) soit placée dans ledit canal (113), la position verrouillée correspondant à une mise en butée de l'embout élargie (104) contre une paroi externe de la pièce support (5, 6, 7, 8) délimitant une première extrémité dudit canal (113) et la position déverrouillée correspond à un éloignement dudit embout élargi (104) de ladite paroi, **caractérisé en ce que** l'embout (104) possède au moins deux protubérances externes (111), et **en ce que** le canal interne (113) possède au moins deux canaux satellites (115), et **en ce qu'**une fois que l'embout (104) a été sorti du canal (113) correspondant à la position déverrouillée de l'élément de fixation (100) rapide, ledit élément de fixation (100) rapide subit d'abord un mouvement de rotation de manière à placer les protubérances (111) en face des canaux satellites (115), puis un mouvement de translation de façon à faire coulisser l'embout (104) dans le canal (113) sans possibilité de rotation jusqu'à venir en butée contre la deuxième extrémité du canal interne (113).

2. Véhicule selon la revendication 1, **caractérisé en ce que** l'excentrique (105, 106) fait partie intégrante du levier d'actionnement (101) et se présente sous la forme de deux pattes ajourées (105, 106) assimilables chacune à un anneau de largeur variable, et **en ce que** la tige (103) possède un axe de rotation (109) passant par lesdites deux pattes (105, 106), une mise en rotation du levier (101) entrainant une mise en rotation desdites pattes (105, 106) provoquant une translation de la tige (103) en raison de la largeur variable desdites pattes (105, 106).

3. Véhicule selon l'une quelconque des revendications 1 ou 2, **caractérisé en ce que** chaque barre (2, 3) présente une paroi inférieure (114) plane et de faible épaisseur, et **en ce que** l'élément de fixation (100) rapide est placé dans une ouverture de ladite paroi inférieure (114) de sorte que le levier d'actionnement (101) saille d'un côté de la paroi inférieure (114) à l'intérieur de la barre (2, 3) et la tige d'actionnement (103) saille de l'autre côté de ladite paroi (114) en étant inséré dans le canal interne (113) de la pièce support (5, 6, 7, 8).

4. Véhicule selon la revendication 3, **caractérisé en ce que** dans la position de verrouillage le levier d'actionnement (101) s'étend le long de la paroi inférieure (114) de la barre (2, 3) en venant au contact de ladite paroi (114), et **en ce que** dans la position de déverrouillage le levier d'actionnement (101) saille perpendiculairement de la paroi inférieure (114) de ladite barre (2, 3).

5. Véhicule selon l'une quelconque des revendications 1 à 4, **caractérisé en ce que** :
- le toit (4) possède quatre pièces support (5, 6, 7, 8), dont deux pièces support arrière (5, 6) alignées suivant un axe transversal Y du véhicule et deux pièces support avant (7, 8) alignés suivant un axe transversal Y du véhicule, de sorte que chaque barre (2, 3) est fixée à une pièce support avant (7, 8) et à une pièce support arrière (5, 6) lorsqu'elle occupe la position longitudinale, lesdites deux fixations étant réalisées chacune avec un élément de fixation (100) rapide,
- Une fois que l'élément de fixation (100) rapide permettant de fixer la première barre (2) à une pièce support arrière (6) a été déverrouillé, ladite première barre (2) est apte à pivoter autour d'un axe de rotation vertical Z de la pièce support avant (7) sur laquelle elle était montée, pour pouvoir joindre l'autre pièce support avant (8) et s'étendre suivant un axe transversal Y du véhicule et,
- Une fois que l'élément de fixation (100) rapide permettant de fixer la deuxième barre (3) à une pièce support arrière (5) et que l'élément de fixation (100) rapide permettant de fixer ladite deuxième barre (3) à une pièce support avant (8) ont été déverrouillés, la dite deuxième barre (3) est apte à pivoter autour d'un axe de rotation vertical Z de ladite pièce support arrière (5) après avoir subi un mouvement de translation vers l'avant le long de ladite pièce support arrière (5), de manière à venir placer une extrémité de ladite deuxième barre (3) en correspondance avec ledit axe de rotation vertical Z, et pouvoir joindre l'autre pièce support arrière (6) de manière à s'étendre suivant un axe transversal Y du véhicule.

6. Véhicule selon la revendication 5, **caractérisé en ce que** chaque barre (2, 3) subit un mouvement de translation préalable vers le haut de manière à empêcher ladite barre (2, 3) de venir en butée contre un indexeur (10, 13) de la pièce support (5, 6, 7, 8) dans laquelle l'axe de rotation vertical Z est fixé, et ainsi empêcher le mouvement de rotation lui permettant de s'étendre suivant un axe transversal Y du véhicule.

7. Véhicule selon l'une quelconque des revendications 5 ou 6, **caractérisé en ce que** la deuxième barre (3) possède une fente s'étendant le long d'un axe longitudinal de ladite deuxième barre (3), et **en ce que** l'axe de rotation vertical Z de la pièce support arrière (5, 6) passe dans ladite fente de sorte que ladite fente se déplace relativement audit axe de rotation vertical lorsque la deuxième barre (3) subit le mouvement de translation.

8. Véhicule selon l'une quelconque des revendications 5 à 7, **caractérisé en ce que** la première barre (2) et la deuxième barre (3) pivotent sur la totalité de leur longueur pour passer de la position longitudinale à la position transversale.

9. Procédé de déplacement de la première barre (2) et de la deuxième barre (3) entre la position longitudinale et la position transversale pour un véhicule conforme à l'une quelconque des revendications 1 à 8, **caractérisé en ce qu'**il comporte les étapes suivantes :
- une étape de déverrouillage des deux éléments de fixation (110) rapides de la première barre (2) placés aux deux extrémités de ladite première barre (2), au moyen d'un relèvement par rotation des leviers d'actionnement (101) puis d'une mise en rotation manuelle desdits éléments de fixation (100),
- une étape de surélévation de la première barre (2),
- une étape de mise en rotation de la première barre (2) autour d'un axe de rotation vertical de la pièce support avant (7) sur laquelle elle est montée, pour atteindre l'autre pièce support avant (8) et s'étendre ainsi le long d'un axe transversal Y du véhicule,
- une étape de verrouillage des deux éléments de fixation (100) rapides de la première barre (2) au moyen d'un rabattement par rotation des leviers d'actionnement (101) contre les deux pièces support avant (7, 8),
- une étape de déverrouillage des deux éléments de fixation (100) rapides de la deuxième barre (3) placés aux deux extrémités de ladite deuxième barre (3), au moyen d'un relèvement par rotation des leviers d'actionnement (101) puis d'une mise en rotation manuelle desdits éléments de fixation (100),
- une étape de translation vers l'avant de la deuxième barre (3) le long de la pièce support arrière (5) sur laquelle elle est montée de manière à venir placer une extrémité de ladite deuxième barre (3) en correspondance avec un axe de rotation vertical Z de ladite pièce arrière (5),
- une étape de surélévation de la deuxième barre (3),
- une étape de mise en rotation de la deuxième barre (3) autour dudit axe de rotation vertical pour atteindre l'autre pièce support arrière (6) et s'étendre ainsi le long d'un axe transversal Y du véhicule,
- une étape de verrouillage des deux éléments de fixation (100) rapides de la deuxième barre (3) au moyen d'un rabattement par rotation des leviers d'actionnement (101).

## Patentansprüche

1. Fahrzeug (1), umfassend ein Dach (4), eine erste Reling (2) und eine zweite Reling (3). die jeweils an dem Dach (4) über mindestens ein Halterungsteil (5, 6, 7, 8) befestigt sind, wobei die beiden Relings (2, 3) zwischen einer Längsposition, bei der sie sich jeweils entlang einer Längsachse X des Fahrzeugs erstrecken, und einer Querposition, bei der sie sich jeweils entlang einer Querachse Y des Fahrzeugs erstrecken, verlagerbar sind, wobei jede der Relings (2, 3) an dem mindestens einen Halterungsteil (5, 6, 7, 8) über mindestens ein Schnellbefestigungselement (100) befestigt ist, das einen Betätigungshebel (101), einen Exzenter (105, 106) und eine Stange (103), die in einem aufgeweiteten Endstück (104) endet, umfasst, und wobei das Schnellbefestigungselement (100) geeignet ist, aus einer Verriegelungsposition der Reling (2, 3) an dem Halterungsteil (5, 6, 7, 8), bei der das Endstück (104) an einer Wand des Halterungsteils (5, 6, 7, 8) anliegt und die Reling (2, 3) an diesem (5, 6, 7, 8) hält, nach einem Drehen des Betätigungshebels (101) in eine Entriegelungsposition überzugehen, bei der sich die Stange (103) dank des Vorhandenseins des Exzenters (105, 106) verlagert hat, so dass sich das aufgeweitete Endstück (104) von seiner Position beabstandet hat und die Bewegung der Reling (2, 3) freigibt, um es ihr zu ermöglichen, verlagert zu werden, wobei jedes Halterungsteil (5, 6, 7, 8) einen Kanal (113) umfasst und wobei jedes Schnellbefestigungselement (100) die Reling (2, 3) und das Halterungsteil (5, 6, 7, 8) durchdringt, so dass die Stange (103) in dem Kanal (113) angeordnet ist, wobei die verriegelte Position einem Anlegen des aufgeweiteten Endstücks (104) an eine Außenwand des Halterungsteils (5, 6, 7, 8) entspricht, die ein erstes Ende des Kanals (113) begrenzt, und die entriegelte Position einem Entfernen des aufgeweiteten Endstücks (104) von der Wand entspricht,
**dadurch gekennzeichnet, dass** das Endstück (104) mindestens zwei äußere Vorsprünge (111) besitzt und dass der innere Kanal (113) mindestens zwei Satellitenkanäle (115) besitzt und dass, sobald das Endstück (104) aus dem Kanal (113) entfernt worden ist, was der entriegelten Position des Schnellbefestigungselements (100) entspricht, das Schnellbefestigungselement (100) zunächst eine Drehbewegung erfährt, so dass die Vorsprünge (111) gegenüber den Satellitenkanälen (115) angeordnet werden, dann eine Translationsbewegung, so dass das Endstück (104) ohne Drehmöglichkeit in dem Kanal (113) verschoben wird, bis es an das zweiten Ende des inneren Kanals (113) anschlägt.

2. Fahrzeug nach Anspruch 1, **dadurch gekennzeichnet, dass** der Exzenter (105, 106) einstückig mit dem Betätigungshebel (101) ist und in Form von zwei gelochten Lappen (105, 106) vorliegt, die jeweils einem Ring von variabler Breite ähnlich sind, und dass die Stange (103) eine Rotationsachse (109) besitzt, die durch die beiden Lappen (105, 106) verläuft, wobei ein Drehen des Hebels (101) zu einem Drehen der Lappen (105, 106) führt, was aufgrund der variablen Breite der Lappen (105, 106) eine Translation der Stange (103) bewirkt.

3. Fahrzeug nach einem der Ansprüche 1 oder 2, **dadurch gekennzeichnet**, das jede Reling (2, 3) eine untere Wand (114) aufweist, die plan und von geringer Dicke ist, und dass das Schnellbefestigungselement (100) in einer Öffnung der unteren Wand (114) angeordnet ist, so dass der Betätigungshebel (101) auf einer Seite der unteren Wand (114) in die Reling (2, 3) hineinragt und die Betätigungsstange (103) auf der anderen Seite der Wand (114) herausragt, wobei sie in den inneren Kanal (113) des Halterungsteils (5, 6, 7, 8) eingeführt ist.

4. Fahrzeug nach Anspruch 3, **dadurch gekennzeichnet, dass** sich der Betätigungshebel (101) in der Verriegelungsposition entlang der unteren Wand (114) der Reling (2, 3) erstreckt, wobei er mit der Wand (114) in Kontakt gelangt, und dass der Betätigungshebel (101) in der Entriegelungsposition senkrecht aus der unteren Wand (114) der Reling (2, 3) herausragt.

5. Fahrzeug nach einem der Ansprüche 1 bis 4, **dadurch gekennzeichnet, dass**:
- das Dach (4) vier Halterungsteile (5, 6, 7, 8) besitzt, darunter zwei hintere Halterungsteile (5, 6), die entlang einer Querachse Y des Fahrzeug fluchten, und zwei vordere Halterungsteile (7, 8), die entlang einer Querachse Y des Fahrzeugs fluchten, so dass jede Reling (2, 3) an einem vorderen Halterungsteil (7, 8) und an einem hinteren Halterungsteil (5, 6) befestigt ist, wenn sie die Längsposition einnimmt, wobei die beiden Befestigungen jeweils mit einem Schnellbefestigungselement (100) ausgeführt werden,
- Sobald das Schnellbefestigungselement (100), das es ermöglicht, die erste Reling (2) an einem hinteren Halterungsteil (6) zu befestigen, entriegelt worden ist, die erste Reling (2) in der Lage ist, um eine vertikale Rotationsachse Z des vorderen Halterungsteils (7), an dem sie montiert war, zu schwenken, um das andere vordere Halterungsteil (8) erreichen zu können und sich entlang einer Querachse Y des Fahrzeugs zu erstrecken, und,
- Sobald das Schnellbefestigungselement (100), das es ermöglicht, die zweite Reling (3) an einem hinteren Halterungsteil (5) zu befestigen, und das Schnellbefestigungselement (100), das es ermöglicht, die zweite Reling (3) an einem vorderen Halterungsteil (8) zu befestigen, entriegelt worden sind, die zweite Reling (3) in der Lage ist, um eine vertikale Rotationsachse Z des hinteren Halterungsteils (5) zu schwenken, nachdem sie eine Translationsbewegung nach vorn entlang des hinteren Halterungsteils (5) erfahren hat, so dass ein Ende der zweiten Reling (3) in Übereinstimmung mit der vertikalen Rotationsachse Z angeordnet wird, und das andere hintere Halterungsteil (6) erreichen kann, so dass sie sich entlang einer Querachse Y des Fahrzeugs erstreckt.

6. Fahrzeug nach Anspruch 5, **dadurch gekennzeichnet, dass** jede Reling (2, 3) eine vorherige Translationsbewegung nach oben erfährt, so dass die Reling (2, 3) daran gehindert wird, an ein Positionierelement (10, 13) des Halterungsteils (5, 6, 7, 8) anzuschlagen, in dem die vertikale Rotationsachse Z befestigt ist, und so die Drehbewegung zu verhindern, die es ihr ermöglicht, sich entlang einer Querachse Y des Fahrzeugs zu erstrecken.

7. Fahrzeug nach einem der Ansprüche 5 oder 6, **dadurch gekennzeichnet, dass** die zweite Reling (3) einen Schlitz besitzt, der sich entlang einer Längsachse der zweiten Reling (3) erstreckt, und dass die vertikale Rotationsachse Z des hinteren Halterungsteils (5, 6) in dem Schlitz verläuft, so dass sich der Schlitz relativ zu der vertikalen Rotationsachse verlagert, wenn die zweite Reling (3) die Translationsbewegung erfährt.

8. Fahrzeug nach einem der Ansprüche 5 bis 7, **dadurch gekennzeichnet, dass** die erste Reling (2) und die zweite Reling (3) über ihre gesamte Länge schwenken, um aus der Längsposition in die Querposition überzugehen.

9. Verfahren zum Verlagern der ersten Reling (2) und der zweiten Reling (3) zwischen der Längsposition und der Querposition bei einem Fahrzeug nach einem der Ansprüche 1 bis 8, **dadurch gekennzeichnet, dass** es die folgenden Schritte umfasst:
- einen Schritt des Entriegelns der beiden Schnellbefestigungselemente (110) der ersten Reling (2), die an den beiden Enden der ersten Reling (2) angeordnet sind, mittels eines Aufrichtens durch Drehen der Betätigungshebel (101), dann eines manuellen Drehens der Befestigungselemente (100),
- einen Schritt des Anhebens der ersten Reling (2),
- einen Schritt des Drehens der ersten Reling (2) um eine vertikale Rotationsachse des vorderen Halterungsteils (7), an dem sie montiert ist, um an das andere vordere Halterungsteil (8) heranzureichen und sich so entlang einer Querachse Y des Fahrzeugs zu erstrecken,
- einen Schritt des Verriegelns der beiden Schnellbefestigungselemente (100) der ersten Reling (2) mittels eines Umlegens durch Drehen der Betätigungshebel (101) gegen die beiden vorderen Halterungsteile (7, 8),
- einen Schritt des Entriegelns der beiden Schnellbefestigungselemente (100) der zweiten Reling (3), die an den beiden Enden der zweiten Reling (3) angeordnet sind, mittels eines Aufrichtens durch Drehen der Betätigungshebel (101), dann eines manuellen Drehens der Befestigungselemente (100),
- einen Schritt der Translation nach vorn der zweiten Reling (3) entlang des hinteren Halterungsteils (5), an dem sie montiert ist, so dass ein Ende der zweiten Reling (3) in Übereinstimmung mit einer vertikalen Rotationsachse Z des hinteren Teils (5) angeordnet wird,
- einen Schritt des Anhebens der zweiten Reling (3),
- einen Schritt des Drehens der zweiten Reling (3) um die vertikale Rotationsachse, um an das andere hintere Halterungsteil (6) heranzureichen und sich so entlang einer Querachse Y des Fahrzeugs zu erstrecken,
- einen Schritt des Verriegelns der beiden Schnellbefestigungselemente (100) der zweiten Reling (3) mittels eines Umlegens durch Drehen der Betätigungshebel (101) .

## Claims

1. Vehicle (1) comprising a roof (4), a first bar (2) and a second bar (3) that are each fastened to said roof (4) via at least one support piece (5, 6, 7, 8), said two bars (2, 3) being movable between a longitudinal position in which they each extend along a longitudinal axis X of the vehicle and a transverse position in which they each extend along a transverse axis Y of the vehicle,
each of the bars (2, 3) being fastened to said at least one support piece (5, 6, 7, 8) via at least one quick fastening element (100) comprising an actuation lever (101), an eccentric (105, 106) and a rod (103) terminated by a widened end piece (104), and the quick fastening element (100) being able to pass from a position for locking the bar (2, 3) on the support piece (5, 6, 7, 8), in which the end piece (104) is in abutment against a wall of said support piece (5, 6, 7, 8) and holds the bar (2, 3) against the latter (5, 6, 7, 8), to a position of unlocking following rotation of the actuation lever (101) and in which the rod (103) is moved by virtue of the presence of the eccentric (105, 106), such that the widened end piece (104) is moved away from its position and frees the bar (2, 3) in terms of movement so as to allow it to be moved, each support piece (5, 6, 7, 8) having a channel (113) and each quick fastening element (100) passing through the bar (2, 3) and the support piece (5, 6, 7, 8) such that the rod (103) is placed in said channel (113), the locked position corresponding to abutment of the widened end piece (104) against an external wall of the support piece (5, 6, 7, 8) that delimits a first end of said channel (113) and the unlocked position corresponding to separation of said widened end piece (104) from said wall,
**characterized in that** the end piece (104) has at least two external protuberances (111), and **in that** the internal channel (113) has at least two satellite channels (115), and **in that**, once the end piece (104) has been taken out of the channel (113) corresponding to the unlocked position of the quick fastening element (100), said quick fastening element (100) first undergoes a rotational movement so as to place the protuberances (111) opposite the satellite channels (115), and then a translational movement so as to make the end piece (104) slide in the channel (113) without the possibility of rotation until it comes into abutment against the second end of the internal channel (113).

2. Vehicle according to Claim 1, **characterized in that** the eccentric (105, 106) forms an integral part of the actuation lever (101) and is in the form of two perforated tabs (105, 106) that can each be likened to a ring of variable width, and **in that** the rod (103) has a rotation pin (109) passing through said two tabs (105, 106), rotation of the lever (101) bringing about rotation of said tabs (105, 106) causing translation of the rod (103) as a result of the variable width of said tabs (105, 106) .

3. Vehicle according to either one of Claims 1 and 2, **characterized in that** each bar (2, 3) has a flat lower wall (114) of small thickness, and **in that** the quick fastening element (100) is placed in an opening of said lower wall (114) such that the actuation lever (101) protrudes from one side of the lower wall (114) inside the bar (2, 3) and the actuation rod (103) protrudes from the other side of said wall (114), being inserted into the internal channel (113) of the support piece (5, 6, 7, 8) .

4. Vehicle according to Claim 3, **characterized in that** in the locking position the actuation lever (101) extends along the lower wall (114) of the bar (2, 3), coming into contact with said wall (114), and **in that** in the unlocking position the actuation lever (101) protrudes perpendicularly from the lower wall (114) of said bar (2, 3) .

5. Vehicle according to any one of Claims 1 to 4, **characterized in that**:
- the roof (4) has four support pieces (5, 6, 7, 8), including two rear support pieces (5, 6) aligned along a transverse axis Y of the vehicle and two front support pieces (7, 8) aligned along a transverse axis Y of the vehicle, such that each bar (2, 3) is fastened to one front support piece (7, 8) and to one rear support piece (5, 6) when it occupies the longitudinal position, said two fastenings each being realised with a quick fastening element (100),
- once the quick fastening element (100) that makes it possible to fasten the first bar (2) to a rear support piece (6) has been unlocked, said first bar (2) is able to pivot about a vertical axis of rotation Z of the front support piece (7) on which it was mounted, so as to be able to join the other front support piece (8) and extend along a transverse axis Y of the vehicle and,
- once the quick fastening element (100) that makes it possible to fasten the second bar (3) to a rear support piece (5) and the quick fastening element (100) that makes it possible to fasten said second bar (3) to a front support piece (8) have been unlocked, said second bar (3) is able to pivot about a vertical axis of rotation Z of said rear support piece (5) after having undergone a forward translational movement along said rear support piece (5), so as to place one end of said second bar (3) in correspondence with said vertical axis of rotation Z, and be able to join the other rear support piece (6) so as to extend along a transverse axis Y of the vehicle.

6. Vehicle according to Claim 5, **characterized in that** each bar (2, 3) undergoes a prior upward translational movement so as to prevent said bar (2, 3) from coming into abutment against an indexer (10, 13) of the support piece (5, 6, 7, 8) in which the vertical axis of rotation Z is fixed, and thus prevent the rotational movement allowing it to extend along a transverse axis Y of the vehicle.

7. Vehicle according to either one of Claims 5 and 6, **characterized in that** the second bar (3) has a slot extending along a longitudinal axis of said second bar (3), and **in that** the vertical axis of rotation Z of the rear support piece (5, 6) passes through said slot such that said slot moves relative to said vertical axis of rotation when the second bar (3) undergoes the translational movement.

8. Vehicle according to any one of Claims 5 to 7, **characterized in that** the first bar (2) and the second bar (3) pivot over the entirety of their length so as to pass from the longitudinal position to the transverse position.

9. Method for moving the first bar (2) and the second bar (3) between the longitudinal position and the transverse position for a vehicle in accordance with any one of Claims 1 to 8, **characterized in that** it involves the following steps:
- a step of unlocking the two quick fastening elements (110) of the first bar (2) that are placed at the two ends of said first bar (2), by means of lifting, by rotation, of the actuation levers (101) then of manual rotation of said fastening elements (100),
- a step of raising the first bar (2),
- a step of rotating the first bar (2) about a vertical axis of rotation of the front support piece (7) on which it is mounted, so as to reach the other front support piece (8) and thus extend along a transverse axis Y of the vehicle,
- a step of locking the two quick fastening elements (100) of the first bar (2) by means of folding down, by rotation, the actuation levers (101) against the two front support pieces (7, 8),
- a step of unlocking the two quick fastening elements (100) of the second bar (3) that are placed at the two ends of said second bar (3), by means of lifting, by rotation, of the actuation levers (101) then of manual rotation of said fastening elements (100),
- a step of forward translation of the second bar (3) along the rear support piece (5) on which it is mounted so as to place one end of said second bar (3) in correspondence with a vertical axis of rotation Z of said rear piece (5),
- a step of raising the second bar (3),
- a step of rotating the second bar (3) about said vertical axis of rotation so as to reach the other rear support piece (6) and thus extend along a transverse axis Y of the vehicle,
- a step of locking the two quick fastening elements (100) of the second bar (3) by means of folding down, by rotation, the actuation levers (101).
